# EUROPÄISCHE PATENTSCHRIFT

(11) **EP 4 413 846 B1**
(45) Veröffentlichungstag und Bekanntmachung des Hinweises auf die Patenterteilung: **15.10.2025**
(21) Anmeldenummer: 23216559.7
(22) Anmeldetag: 14.12.2023
(51) Int. Cl.: A01D 41/12, A01F 12/46

(54) **ERNTEMASCHINE**
HARVESTING MACHINE
MACHINE DE RÉCOLTE

(30) Priorität: 07.02.2023 DE 102023102862
(43) Veröffentlichungstag der Anmeldung: 14.08.2024
(73) Patentinhaber: CLAAS Selbstfahrende Erntemaschinen GmbH, 33428 Harsewinkel (DE)
(72) Erfinder: Brandmeier, Jonas, 33428 Harsewinkel (DE)
(74) Vertreter: CLAAS Gruppe

(56) Entgegenhaltungen:
- EP-A1- 1 120 027
- EP-A1- 4 147 559
- EP-B1- 3 721 695
- US-A1- 2009 156 278
- US-B1- 6 508 705

## Beschreibung

Die Erfindung betrifft eine Erntemaschine wie etwa einen Mähdrescher, und zwar insbesondere die Befüllung des Ernteguttanks der Erntemaschine, sowie eine dafür ausgebildete Förderschnecke.

Da sich beim Dreschen das Korn von Nichtkornbestanteilen des Ernteguts nach unten absetzt, muss es anschließend aufwärts befördert werden, um einen Ernteguttank des Mähdreschers zu befüllen. Hierzu dient oft ein Elevator mit an einer umlaufenden Kette angeordneten Schaufeln, die am Boden des Dreschwerks gesammeltes Korn aufnehmen, anheben und über eine Guteinlassöffnung in einer Wand des Ernteguttanks in letzteren abgeben. Auf diese Weise kann der Ernteguttank nicht höher befüllt werden als bis zur Unterkante der Guteinlassöffnung.

Um das Aufnahmevermögen des Ernteguttanks vollständiger nutzen zu können, wird daher in DE 44 19 435 C2 eine Förderschnecke vorgeschlagen, die im Innern des Ernteguttanks an der Guteinlassöffnung schwenkbar montiert, vom Elevator abgegebenes Korn aufnimmt und weiter anhebt. Eine Kornauslassöffnung der Förderschnecke schwimmt auf dem im Tank gesammelten Korn auf, so dass das hinzukommende Korn ungehindert abgegeben werden kann. Indem die Auslassöffnung bis in Höhe der Oberkanten der Wände des Ernteguttanks anhebbar ist, kann der Ernteguttank bis zu diesen Oberkanten hin befüllt werden.

Die auf diese Weise überbrückbare Höhe ist durch die horizontalen Abmessungen des Ernteguttanks begrenzt, da die Förderschnecke in einer schwach geneigten Transportstellung im Innern des Ernteguttanks Platz finden muss.

Aus der EP 3 721 695 B1 ist eine Förderschnecke mit zwei um einander kreuzende Förderachsen drehbaren Abschnitten bekannt. Ein proximaler Abschnitt der Förderschnecke ist benachbart zur Guteinlassöffnung an einer Wand des Ernteguttanks und ein distaler Abschnitt der Förderschnecke ist durch den proximalen Abschnitt beabstandet zu der Guteinlassöffnung an dem freien Ende des proximalen Abschnitts angeordnet. Indem der proximale Abschnitt und der distale Abschnitt durch ein Kardangelenk faltbar miteinander verbunden sind, kann eine größere Höhendifferenz überwunden werden. In einer Transportstellung wird die zweiteilig Förderschnecke in einer eingefalteten Position innerhalb des Ernteguttanks platziert. Durch die gelenkige Anbindung des proximalen und distalen Abschnitts ist die Faltbarkeit der Förderschnecke innerhalb der Förderschnecke und die damit einhergehende maximale Länge der Abschnitte der Förderschnecke begrenzt. Für weiter anwachsenden Ernteguttankvolumina steigt die erforderliche Füllhöhe weiter an, sodass ein erhöhter Abgabepunkt der Förderschnecke für eine vollständigere Befüllung erforderlich ist.

Es ist deshalb Aufgabe der Erfindung, die beschriebenen Nachteile des Standes der Technik zu vermeiden und insbesondere eine Erntemaschine mit einem Ernteguttank zu schaffen, die eine Fördereinrichtung mit einem höher gelegenen Abgabepunkt umfasst.

Diese Aufgabe wird erfindungsgemäß durch die kennzeichnenden Merkmale des Anspruchs 1 gelöst.

Gemäß dem Anspruch 1 wird eine Erntemaschine mit einem Ernteguttank und einer tankinternen ersten Förderschneckenanordnung vorgeschlagen, die zumindest eine erste Förderschnecke umfasst, die sich von einer Guteinlassöffnung an einer Wand des Ernteguttanks ins Innere des Ernteguttanks erstreckt und einer beweglichen tankinternen zweiten Förderschneckenanordnung, die zumindest eine zweite Förderschnecke umfasst, wobei die Erntemaschine einen ersten Aktor zum Bewegen der zweiten Förderschneckenanordnung von einer liegend ausgerichteten Transportstellung in eine vertikal ausgerichtete Arbeitsstellung umfasst, wobei die zweite Förderschneckenanordnung durch ein Viergelenk beweglich in dem Ernteguttank angeordnet ist. Die Erfindung hat viele Vorteile. Die Länge der zweiten Förderschneckenanordnung ist durch die viergelenkige Anordnung nicht durch eine ortsfeste Schwenkachse begrenzt. Der in dem Ernteguttank zur Verfügung stehende Raum kann somit optimal genutzt werden, um die zweite Förderschneckenanordnung in der Transportstellung innerhalb des Ernteguttanks in einer flachliegenden Stellung zu positionieren, sodass die zweite Förderschneckenanordnung länger ausführbar ist gegenüber den aus dem Stand der Technik bekannten Förderschneckenanordnungen. Mithin kann durch die Anordnung der zweiten Förderschneckenanordnung mit einem Viergelenk innerhalb Ernteguttanks eine längere zweite Förderschneckenanordnung in dem Ernteguttank platziert werden. Ferner wird ein höherer Abgabepunkt der zweiten Förderschneckenanordnung in der Arbeitsstellung erreicht, sodass der Ernteguttank bis zu einer höheren Füllhöhe befüllbar ist. Die Viergelenkkinematik ermöglicht das Einschwenken der zweiten Förderschneckenanordnung ausgehend von der Arbeitsstellung in die Transportstellung entlang einer bogenförmigen Bahnkurve.

Gemäß einer vorteilhaften Weiterbildung ist vorgesehen, dass das Viergelenk einen ersten und zweiten Gelenkarm umfasst, wobei der erste Gelenkarm mit einem ersten Gelenk drehbeweglich an dem Ernteguttank und mit einem zweiten Gelenk drehbeweglich an der zweiten Förderschneckenanordnung angeordnet ist, wobei der zweite Gelenkarm mit einem dritten Gelenk drehbeweglich an dem Ernteguttank und mit einem vierten Gelenk drehbeweglich an der zweiten Förderschneckenanordnung angeordnet ist. Diese vorteilhafte Weiterbildung stellt auf einfache Art und Weise eine viergelenkige Anordnung zum Verschwenken der zweiten Förderschneckenanordnung zwischen der Transportstellung und der Arbeitsstellung bereit.

Gemäß einer weiteren vorteilhaften Weiterbildung ist vorgesehen, dass sich die Anordnung der zweiten Förderschneckenanordnung mit den ersten und zweiten Gelenkarm zumindest in der Transportstellung der zweiten Förderschneckenanordnung diagonal innerhalb des Ernteguttanks erstreckt, wobei vorzugsweise das erste Gelenk und dritte Gelenk einander gegenüberliegend seitlich innerhalb des Ernteguttanks angeordnet sind. Dadurch, dass die Förderschneckenanordnung mitsamt den ersten und zweiten Gelenkarmen in der Transportstellung diagonal in dem Ernteguttank angeordnet sind, kann der zur Verfügung stehende Raum innerhalb des einzutragen optimal zum Platzieren der zweiten Förderschneckenanordnung genutzt werden.

Eine vorteilhafte Ausgestaltungsvariante sieht vor, dass der erste Aktor mit einem fünften Gelenk drehbeweglich an dem zweiten Gelenkarm und mit einem sechsten Gelenk drehbeweglich an dem Ernteguttank angeordnet ist, sodass bei einer Betätigung des ersten Aktors die zweite Förderschneckenanordnung von der Transportstellung hin zu der Arbeitsstellung und umgekehrt verfahrbar ist.

Weiterhin kann der zweite Gelenkarm eine kürzere Längserstreckung als der erste Gelenkarm aufweisen und vorzugsweise das zweite und vierte Gelenk jeweils beabstandet zueinander angeordnete und sich parallel zueinander erstreckende Schwenkachsen ausbilden, wobei der Abstand der jeweiligen von dem zweiten und vierten Gelenk ausgebildeten Schwenkachsen zueinander geringer ist als die Längserstreckung des zweiten Gelenkarms. Hierdurch wird die zweite Förderschneckenanordnung beim Verschwenken zwischen der Arbeitsstellung und der Transportstellung im Bereich des zweiten und vierten Gelenks jeweils entlang einer durch die Gelenkarme definierten Kreisbahn geführt, wobei die zweite Förderschneckenanordnung hierbei zugleich eine Rotationsbewegung um eine zwischen dem zweiten und vierten Gelenk befindliche Rotationsachse durchführt. Somit ist die zweite Förderschneckenanordnung kollisionsfrei innerhalb des Ernteguttanks zwischen den Stellungen beweglich.

Um eine Kollision zwischen der ersten und zweiten Förderschneckenanordnung zu vermeiden, kann ein zweiter Aktor zum Verfahren der ersten Förderschneckenanordnung vorgesehen und eingerichtet sein, wobei die Erntemaschine eine Steuerungseinrichtung zur Ansteuerung des ersten und zweiten Aktors umfasst, wobei die Steuerungseinrichtung derart eingerichtet ist, sodass diese in einem ersten Schritt den zweiten Aktor zum Verfahren der ersten Förderschneckenanordnung von einer im Wesentlichen flachliegenden Transportstellung hin zu einer Arbeitsstellung und in einem zweiten Schritt den ersten Aktor zum Verfahren der zweiten Förderschneckenanordnung von der Transportstellung in die Arbeitsstellung ansteuert.

Besonders bevorzugt ist es, wenn die Erntemaschine eine an einer oberen Öffnung des Ernteguttanks angeordnete Erweiterungsvorrichtung zur Volumenvergrößerung umfasst, die in einer flachliegenden Verschlussposition einen die obere Öffnung zumindest teilweise verschließenden Deckel bildet und in einer aufgestellten Befüllposition das Volumen des Ernteguttanks vergrößert, wobei die erste Förderschneckenanordnung mit einer Hebelanordnung kinematisch mit der Erweiterungsvorrichtung derart gekoppelt ist, sodass beim Verfahren der Erweiterungsvorrichtung von der Verschlussposition in die Befüllposition zugleich die erste Förderschnecke von einer Transportstellung in eine Arbeitsstellung Verfahren wird.

Um die Steifigkeit der viergelenkigen Anordnung der zweiten Förderschneckenanordnung zu erhöhen, kann die Erntemaschine einen Stabilisator zur Aufnahme von auf die zweite Förderschneckenanordnung wirkenden Kräfte umfassen.

Gemäß einer bevorzugten Ausgestaltung kann der Stabilisator eine gelenkig an der zweiten Förderschneckenanordnung angeordnete Koppel und eine gelenkig mit der Koppel verbundene Stützstrebe umfassen, wobei die Stützstrebe zusätzlich gelenkig mit dem Ernteguttank verbunden ist, wobei vorzugsweise ein Federelement, insbesondere Gasdämpfer, an der Koppel angeordnet ist, wobei das Federelement zur Beaufschlagung der Koppel mit einer Zugkraft vorgesehen und eingerichtet ist. Ein derartiger Stabilisator kann auf die zweite Förderschneckenanordnung wirkende Kräfte aufnehmen, ohne dass der Bewegungsablauf der Viergelenkkinematik durch den Stabilisator blockiert wird.

Eine vorteilhafte Weiterbildung sieht vor, dass die erste Förderschneckenanordnung ein erstes Rohr umfasst, welches die erste Förderschnecke radial außenseitig umschließt und die zweite Förderschneckenanordnung ein zweites Rohr umfasst, welches die zweite Förderschnecke radial außenseitig umschließt, wobei vorzugsweise zwischen der ersten Förderschneckenanordnung und der zweiten Förderschneckenanordnung ein Übergangsstück zur Abdichtung eines Übergangsbereichs zwischen der ersten Förderschneckenanordnung und der zweiten Förderschneckenanordnung. Durch die geschlossene Bauweise wird verhindert, dass bereits im Ernteguttank befindliches Erntegut zu einer der Förderschnecken gelangt und das Erntegut im Kreis gefördert wird. Dadurch reduziert sich der Verschleiß und die Antriebsleistung der Förderschnecken. In einer alternativen Ausgestaltungsvariante ist es aber auch denkbar, dass die zweite Förderschneckenanordnung ohne ein die zweite Förderschnecke radial außenseitig umgebendes Rohr ausgeführt ist.

Vorzugsweise kann in einer Arbeitsstellung der ersten Förderschneckenanordnung und einer Arbeitsstellung der zweiten Förderschneckenanordnung die erste und zweite Förderschneckenanordnung derart zueinander angeordnet sein, so dass ein von der ersten Förderschneckenanordnung geförderter Erntegutstrom an die zweite Förderschneckenanordnung übergeben wird und vorzugsweise die Gutabgabe der zweiten Förderschneckenanordnung mittig im Ernteguttank erfolgt.

Besonders bevorzugt ist es, wenn sich die erste Förderschneckenanordnung in der Arbeitsstellung schräg nach oben in den Ernteguttank hinein erstreckt und die zweite Förderschneckenanordnung in ihrer Transportstellung abschnittsweise unterhalb der in der Arbeitsstellung befindlichen ersten Förderschneckenanordnung angeordnet ist, wobei die zweite Förderschneckenanordnung mittels des Viergelenks derart beweglich ist, sodass diese von der Transportstellung in die Arbeitsstellung kollisionsfrei zu der in der Arbeitsstellung befindlichen ersten Förderschneckenanordnung beweglich ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: einen schematischen Schnitt durch einen Mähdrescher mit Förderschnecke gemäß der Erfindung;
- Figur 2: eine perspektivische Ansicht der Erweiterungsvorrichtung in einer flachliegenden Verschlussposition;
- Figur 3: einen schematischen Schnitt durch den Ernteguttank eines Mähdreschers;
- Figur 4: eine perspektivische Ansicht einer Hebelanordnung zur kinematischen Kopplung einer ersten Förderschneckenanordnung mit der Erweiterungsvorrichtung;
- Figur 5: den Bewegungsablauf eines Verschwenkvorgangs der zweiten Förderschneckenanordnung von einer Transportstellung hin zu einer Arbeitsstellung;
- Figur 6: eine schematische Ansicht eines Stabilisators zur Aufnahme von auf die zweite Förderschneckenanordnung wirkenden Kräfte.

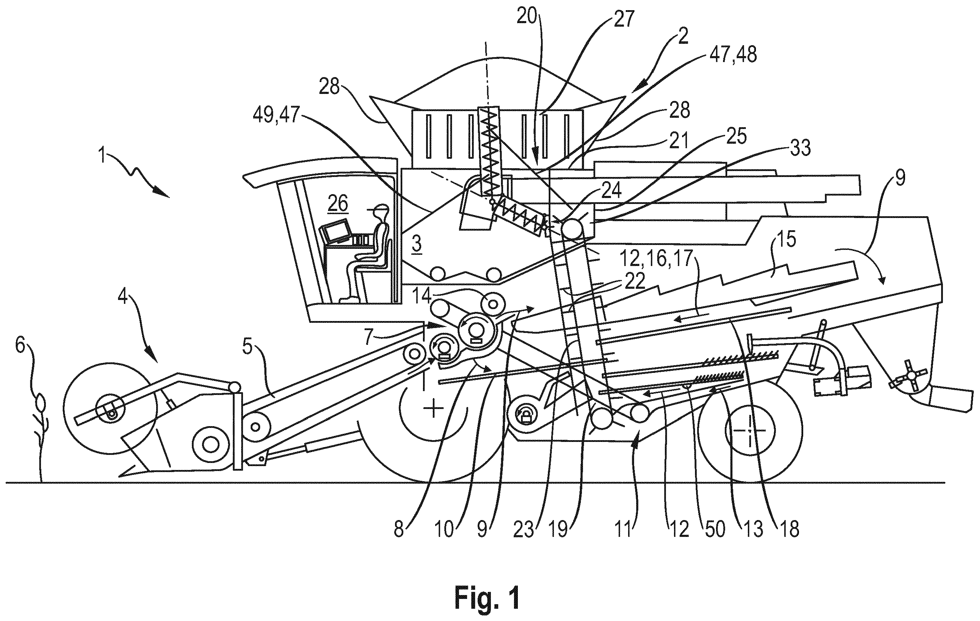

Fig. 1 zeigt einen schematischen Längsschnitt durch eine als Mähdrescher ausgebildete Erntemaschine 1 mit einer faltbaren Erweiterungsvorrichtung 2 zur Vergrößerung des Volumens eines Ernteguttanks 3. Der Mähdrescher ist frontseitig mit einem Schneidwerk 4 ausgestattet, das an einem Schrägförderer 5 angeordnet ist. Mit dem Schneidwerk 4 nimmt der Mähdrescher das Erntegut 6 auf und führt es dem Schrägförderer 5 zu. Der Schrägförderer 5 übergibt das Erntegut 6 an ein nachgeschaltetes Dreschwerk 7. Das Dreschwerk 7 bereitet das Erntegut 6 auf, wobei es in ein Korn-Spreu-Gemisch 8 und einen aus ausgedroschenen Halmen bestehenden Gutstrom 9 unterteilt wird. Das Korn-Spreu-Gemisch 8 wird über einen Vorbereitungsboden 10 direkt zu einer Reinigungseinrichtung 11 gefördert, die das Korn 12 von den Nichtkornbestandteilen 13, das heißt von Halm- und Spreuteilen trennt.

Hinter dem Dreschwerk 7 ist eine entgegen dem Uhrzeigersinn rotierende Wendetrommel 14 angeordnet, die den aus ausgedroschenen Halmen bestehenden Gutstrom 9 auf einen Hordenschüttler 15 fördert. Der Hordenschüttler 15 trennt noch im Gutstrom 9 vorhandenes Korn 12, Kurzstroh 16 und Spreu 17, die über einen Rücklaufboden 18 ebenfalls in die Reinigungseinrichtung 11 gelangen. Die von der Reinigungseinrichtung 11 abgetrennten Körner 12 fördert ein Kornelevator 19 in den Ernteguttank 3. Ein Massenstromsensor 50 zum Erfassen des Massenstroms des Korns ist z.B. auf dem Weg des Korns von der Reinigungseinrichtung 11 zum Kornelevator 19 angeordnet.

Der Kornelevator 19 umfasst ein mit Schaufeln 22 bestücktes, endlos umlaufendes Band 23. Die Schaufeln 22 übernehmen das Korn von der Reinigungseinrichtung 11 und fördern es in einem Schacht aufwärts bis zu einer Guteinlassöffnung 24 in einer Wand 25 des Ernteguttanks 3.

Der Ernteguttank 3 ist als ein Behälter mit im Wesentlichen rechteckförmiger Grundfläche ausgeführt und hinter einer Fahrerkabine 26 des Mähdreschers angeordnet. Der Ernteguttank 3 weist an seiner Oberseite eine Öffnung 20 auf, an Oberkanten 21 seiner Wände sind mehrere die Erweiterungsvorrichtung 2 bildende plattenförmige Elemente 27, 28 angelenkt. Die Platten 27, 28 sind zwischen einer über der Öffnung miteinander überlappenden geschlossenen Position und einer in Fig. 1 gezeigten Arbeitsstellung schwenkbar, in der die Erweiterungsvorrichtung 2 den Ernteguttank 3 nach oben trichterförmig erweitert.

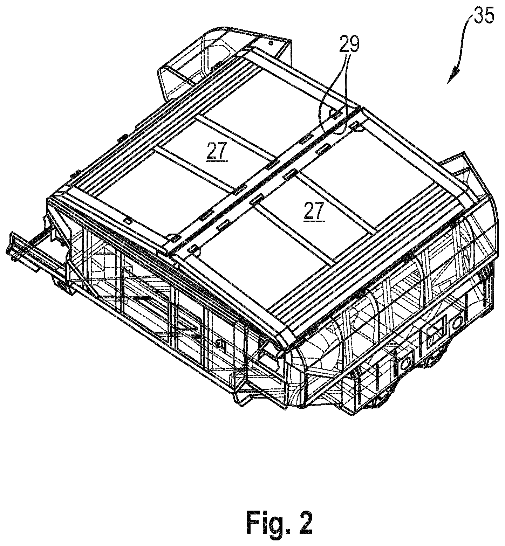

Fig. 2 zeigt eine perspektivische Ansicht der Erweiterungsvorrichtung 2 in einer flachliegenden Verschlussposition 35. Die offene Oberseite des Ernteguttanks 3 ist rechteckig aber nicht notwendigerweise quadratisch; die kürzeren Kanten des Rechtecks erstrecken sich hier in der Längsrichtung des Mähdreschers, und die beiden an sie angelenkten Platten 27 sind so bemessen, dass ihre gelenkfernen Kanten 29 einander in der Verschlussposition 35 in etwa berühren und sie die darunterliegenden Platten 28 komplett verbergen.

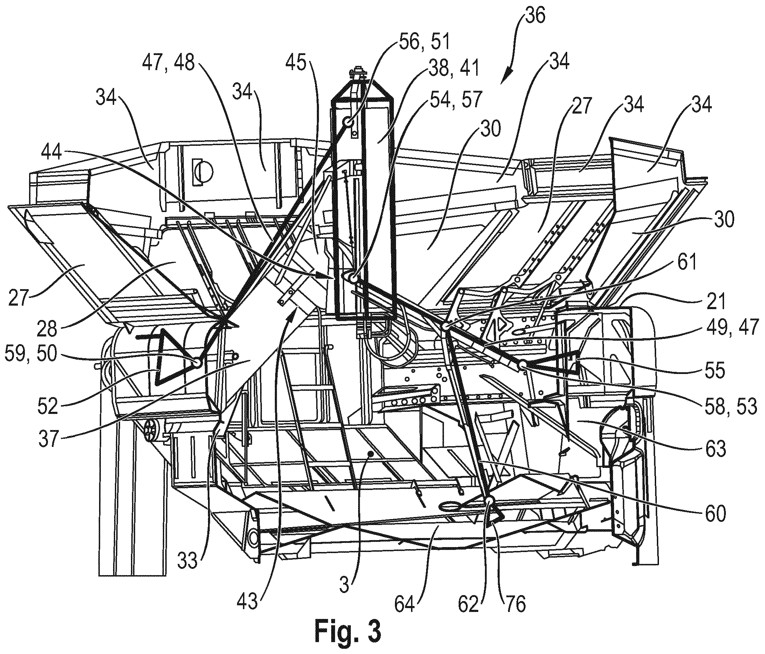

In der Ansicht der Fig. 3 sind die Platten 27, 28 in ihre auch in Fig. 1 gezeigte Befüllposition geschwenkt, in der sie zusammen mit die kurzen Kanten der Platten 27, 28 verbindenden dreieckigen Elementen 30 den Ernteguttank 3 trichterförmig nach oben erweitern. Weitere den Ernteguttank 3 zusätzlich nach oben erweiternde Platten 34 sind gelenkig an den sich in der geöffneten Stellung obenseitig befindlichen Oberkanten der Platten 27 und 28 sowie den dreieckförmigen Elementen 30 angeordnet. Die weiteren Platten 34 bilden eine zweite den Ernteguttank 3 nach oben erweiternde Erweiterungsebene der Erweiterungsvorrichtung 2.

In der Schnittansicht der Fig. 3 sind eine erste und zweite Förderschneckenanordnung 37, 38 ersichtlich, die sich jeweils in ihrer Arbeitsstellung 31, 78 befinden. Die erste Förderschneckenanordnung 37 umfasst ein erstes Rohr 39, welches eine erste Förderschnecke 40 radial außenseitig umschließt. Die zweite Förderschneckenanordnung 38 umfasst ein zweites Rohr 41, welches eine zweite Förderschnecke 42 radial außenseitig umschließt. Eine Basis 33 der ersten Förderschneckenanordnung 37 ist an der Wand 25 benachbart zur Guteinlassöffnung 24 montiert, um die erste Förderschneckenanordnung 37 so vor der Guteinlassöffnung 24 zu platzieren, dass durch die Guteinlassöffnung 24 gefördertes Korn von der ersten Förderschneckenanordnung 37 aufgenommen werden kann.

Zu diesem Zweck kann ein offenes Ende des ersten Rohrs 39 unmittelbar vor der Guteinlassöffnung 24 platziert sein. Die erste Förderschnecke 40 kann an einem Antrieb des Elevators 19 mittelbar oder unmittelbar gekoppelt sein, um mit dem Elevator 19 zwangsweise trieblich gekoppelt zu sein. Die erste Förderschneckenanordnung 37 ist schwenkbar an der Basis 33 angeordnet. In der in Fig. 3 gezeigten Arbeitsstellung 78 der ersten Förderschneckenanordnung 37 sind das erste Rohr 39 und die darin verlaufende erste Förderschnecke 40 in eine ansteigende Stellung geschwenkt. Die Steigung der ersten Förderschnecke 40 beträgt hier wenigstens 30 Grad, vorzugsweise ca. 45 Grad. Die Auswurfseite 43 ist mittig über der offenen Oberseite des Ernteguttanks 3 platziert. Die zweite Förderschneckenanordnung 38 erstreckt sich in der in Fig. 3 dargestellten Arbeitsstellung 31 vertikal und ist mittig innerhalb der Ernteguttanks 3 positioniert.

Eine Einlassöffnung 44 des zweiten Rohrs 41 ist der Auswurfseite 43 des ersten Rohrs 39 zugeordnet, sodass ein von der ersten Förderschneckenanordnung 37 geförderter Erntegutstrom an die zweite Förderschneckenanordnung 38 übergeben wird. Hierfür kann zwischen der Einlassöffnung 44 des zweiten Rohrs 41 und der Auswurfseite 43 des ersten Rohrs 39 ein Übergangsstück 45 angeordnet sein. Das Übergangsstück 45 ist rohrförmig ausgebildet und bewirkt eine verlustfreie Übergabe eines Erntegutstroms von der ersten Förderschneckenanordnung 37 an die zweite Förderschneckenanordnung 38. Der Erntegutstrom wird von der zweiten Förderschneckenanordnung 38 in vertikaler Richtung weiterbefördert.

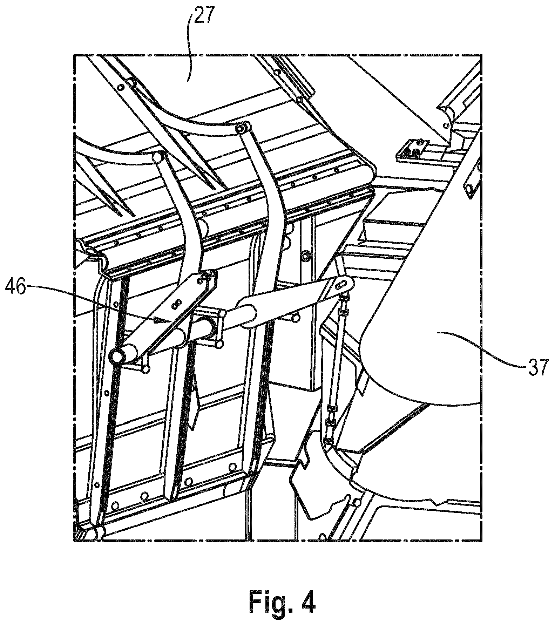

Die erste und zweite Förderschneckenanordnung 37, 38 sind jeweils beweglich von der Arbeitsstellung 31, 78 hin zu einer Transportstellung 32 angeordnet. Die Schwenkbewegungen der Platten 27, 28 und der ersten Förderschneckenanordnung 37 sind mechanisch aneinander gekoppelt. Hierfür ist die erste Förderschneckenanordnung 37 mit einer in Fig. 4 dargestellten Hebelanordnung 46 kinematisch mit der Erweiterungsvorrichtung 2 gekoppelt, sodass beim Verfahren der Erweiterungsvorrichtung 2 von der Verschlussposition 35 in die Befüllposition 36 zugleich die erste Förderschneckenanordnung 37 von der Transportstellung in die Arbeitsstellung 78 Verfahren wird.

Die zweite Förderschneckenanordnung 38 ist zum Verschwenken von der Arbeitsstellung 31 hin zu der Transportstellung 32 mittels eines Viergelenks 47 beweglich in dem Ernteguttank 3 angeordnet. Das Viergelenk 47 umfasst einen ersten und zweiten Gelenkarm 48, 49, die jeweils einendig an dem Ernteguttank 3 und anderendig an der zweiten Förderschneckenanordnung 38 drehbar beziehungsweise schwenkbar gelagert sind. Der erste Gelenkarm 48 ist mit einem ersten Gelenk 50 drehbeweglich an dem Ernteguttank 3 und mit einem zweiten Gelenk 51 drehbeweglich an der zweiten Förderschneckenanordnung 38, insbesondere an dem zweiten Rohr 41, angeordnet. Hier und vorzugsweise ist an einer Wandung des Ernteguttanks 3 eine Konsole 52 angeordnet, an der das erste Gelenk 52 angeordnet ist. Der zweite Gelenkarm 49 ist mit einem dritten Gelenk 53 drehbeweglich an dem Ernteguttank 3 und mit einem vierten Gelenk 54 drehbeweglich an der zweiten Förderschneckenanordnung 38, insbesondere an dem zweiten Rohr 41, angeordnet. Hier und vorzugsweise ist an einer Wandung des Ernteguttanks 3 eine weitere Konsole 55 angeordnet, an der das dritte Gelenk 53 angeordnet ist. Das zweite Gelenk 51 und vierte Gelenk 54 sind beabstandet zueinander an der zweiten Förderschneckenanordnung 38 angeordnet. Das zweite Gelenk 51 und vierte Gelenk 54 bilden sich zueinander parallel erstreckende Schwenkachsen 56, 57 zum Verschwenken der zweiten Förderschneckenanordnung 38 aus.

Das erste Gelenk 50 und dritte Gelenk 53 bilden sich zueinander parallel erstreckende Schwenkachsen 58, 59 aus. Das erste Gelenk 50 und dritte Gelenk 53 bilden zusammen mit dem zweiten und vierten Gelenk 49, 54 eine Schwinge für die zweite Förderschneckenanordnung 38 aus, hier und vorzugsweise derart, sodass die zweite Förderschneckenanordnung 38 zwischen dem ersten Gelenk 50 und dem dritten Gelenk 53 auf einer Bahnkurve schwenkbeweglich ist. Die Gelenke 50, 51, 53, 54, der erste Gelenkarm 48, der zweite Gelenkarm 49 sowie die zweite Förderschneckenanordnung 38 sind nach Art eine Viergelenks 47 miteinander verbunden, so dass die Bahnkurve zum Verschenken der zweiten Förderschneckenanordnung 38 definiert ist. Ferner erstreckt sich die Anordnung der zweiten Förderschneckenanordnung 38 mit den ersten und zweiten Gelenkarm 48, 49 diagonal innerhalb des Ernteguttanks 3, wobei das erste Gelenk 50 und dritte Gelenk 53 einander gegenüberliegend, vorzugsweise an seitlichen Wandungen 63 des Ernteguttanks, innerhalb des Ernteguttanks 3 angeordnet sind.

Ein als Hydraulikzylinder oder Elektromotor ausgebildeter erster Aktor 60 ist mit einem fünften Gelenk 61 beweglich mit dem zweiten Gelenkarm 49 und mit einem sechsten Gelenk 62 beweglich mit dem Ernteguttank 3 gekoppelt. Mittels des ersten Aktors 60 ist die zweite Förderschneckenanordnung 38 auf der durch das Viergelenk 47 definierten Bahnkurve verfahrbar. Die Bahnkurve wird durch die Längen der Gelenkarme 49, 48 und die Anordnung der Gelenke 50, 51, 53, 54 derart definiert, sodass die zweite Förderschneckenanordnung 38 von der Arbeitsstellung 31 hin zu der Transportstellung 32 beweglich ist, ohne dass eine Kollision mit der in der Arbeitsstellung 78 befindlichen ersten Förderschneckenanordnung 37 auftritt. Hierfür weist der zweite Gelenkarm 49 eine kürzere Längserstreckung als der erste Gelenkarm 48 auf und der Abstand der Schwenkachse 56, 57 zueinander ist geringer als die Längserstreckung des zweiten Gelenkarms 49. Diese Ausgestaltung des Vielgelenks 47 bewirkt, dass beim Verfahren der zweiten Förderschneckenanordnung 38 von der Transportstellung 32 hin zu der Arbeitsstellung 31 die zweite Förderschneckenanordnung 38 um die in der Arbeitsstellung 31 befindlichen ersten Förderschneckenanordnung 37 im Wesentlichen bogenförmig herumgeführt wird.

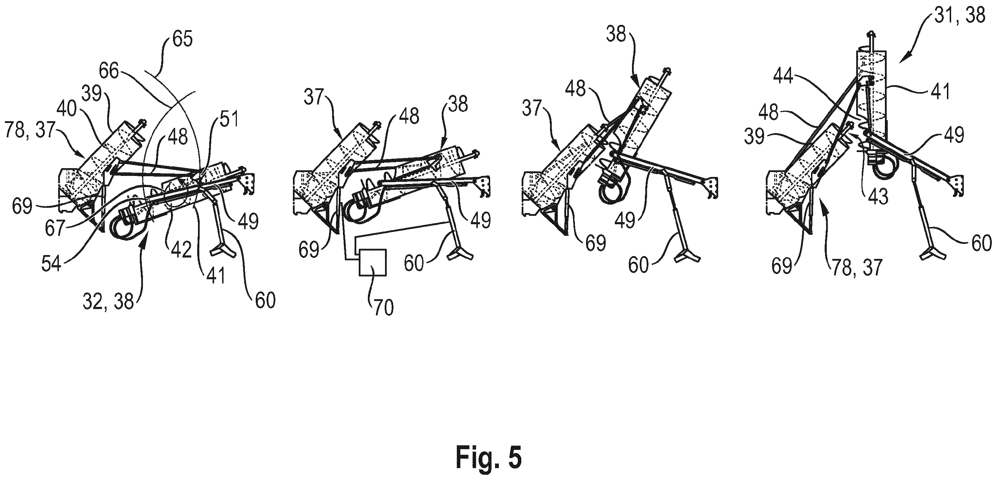

Fig. 5 zeigt schrittweise die Bahnkurve entlang derer die zweite Förderschneckenanordnung 38 von ihrer Transportstellung 32 hin zu der Arbeitsstellung 31 verfahren wird. Die erste Förderschneckenanordnung 37 befindet sich bereits in ihrer Arbeitsstellung 78. Fig. 5 zeigt zunächst die in der Transportstellung 32 befindliche zweite Förderschneckenanordnung 38. In dieser Transportstellung 32 ist die zweite Förderschneckenanordnung 38 flachliegend ausgerichtet. Mit anderen Worten erstreckt sich die zweite Förderschneckenanordnung 38 im Wesentlichen horizontal oberhalb eines Bodens 64 des Ernteguttanks 3. Hierbei befindet sich die zweite Förderschneckenanordnung 38 abschnittsweise unterhalb der ersten Förderschneckenanordnung 37. Der erste Aktor 60 ist eingefahren und der erste Gelenkarm 48 liegt abschnittsweise oberhalb des zweiten Gelenkarms 49.

Um die zweite Förderschneckenanordnung 38 von der Transportstellung 32 in die Arbeitsstellung 31 zu verfahren, wird der Aktor 60 ausgefahren. Das Viergelenk 47 ist derart ausgebildet, dass beim Verfahren von der Transportstellung 32 hin zu der Arbeitsstellung 31 die zweite Förderschneckenanordnung 3 im Bereich des zweiten Gelenks 51 entlang einer durch den ersten Gelenkarm 48 festgelegten ersten Kreisbahn 65 angehoben und zugleich die zweite Förderschneckenanordnung 38 im Bereich des vierten Gelenks 54 entlang einer durch den zweiten Gelenkarm 49 festgelegten zweiten Kreisbahn 66 angehoben wird. Hierbei führt die zweite Förderschneckenanordnung 38 eine Rotationsbewegung 67 um eine zwischen dem zweiten Gelenk 51 und dem vierten Gelenk 54 befindliche Rotationsachse durch. Die Bewegung wird so lange fortgesetzt, bis sich die zweite Förderschneckenanordnung 38 in ihrer Arbeitsstellung 31 befindet. Die Arbeitsstellung 31 der zweiten Förderschneckenanordnung 38 ist in Fig. 5 rechts dargestellt.

In Fig. 5 ist schematisch ein zweiter Aktor 69 dargestellt, der einendig drehbeweglich an der ersten Förderschneckenanordnung 37 und anderendig an dem Ernteguttank 3 angeordnet ist, um die erste Förderschneckenanordnung 37 von ihrer Transportstellung hin zu der Arbeitsstellung 78 zu verfahren. In einer alternativen Ausgestaltungsvariante kann der zweite Aktor 69 auch an der Erweiterungsvorrichtung 2 angeordnet sein. Der Mähdrescher umfasst eine in Fig. 5 schematisch dargestellte Steuerungseinrichtung 70, die zur Ansteuerung des ersten und zweiten Aktors 60, 69 vorgesehen und eingerichtet ist. Die Steuerungseinrichtung 70 ist derart eingerichtet, sodass diese in einem ersten Schritt den zweiten Aktor 69 zum Verfahren der ersten Förderschneckenanordnung 37 von einer im Wesentlichen flachliegenden und hier nicht näher dargestellten Transportstellung hin zu ihrer Arbeitsstellung 78 zu verfahren, wobei erst wenn sich die erste Förderschneckenanordnung 37 in ihrer Arbeitsstellung 78 befindet die zweite Förderschneckenanordnung 38 in einem zweiten Schritt von ihrer Transportstellung 32 hin zu der Arbeitsstellung 31 verfahren wird. Hierdurch soll eine Kollision zwischen der ersten Förderschneckenanordnung 37 und der zweiten Förderschneckenanordnung 38 vermieden werden.

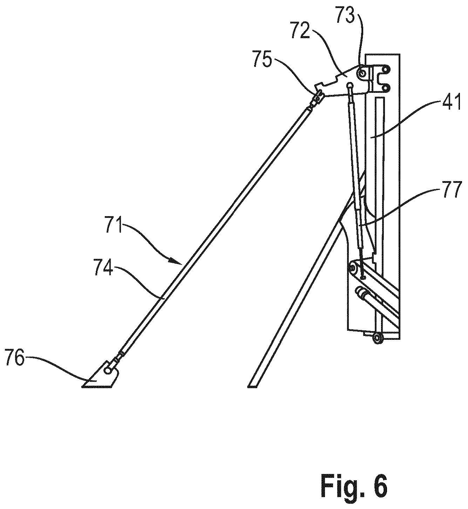

Hier und vorzugsweise ist zur Erhöhung der Steifigkeit ein in Fig. 6 dargestellter Stabilisator 71 an der zweiten Förderschneckenanordnung 38 angeordnet. Eine Koppelstange 74 des Stabilisators 71 ist einendig an der zweiten Förderschneckenanordnung 38 und anderendig mit einer Konsole 67 an dem Ernteguttank 3 angeordnet. Wie Fig. 6 darstellt, ist eine Koppel 72 mit einem siebten Gelenk 73 drehbeweglich mit dem zweiten Rohr 41 der zweiten Förderschneckenanordnung 38 verbunden. Die Koppelstange 74 ist mit einem achten Gelenk 75 drehbeweglich an der Koppel 72 angeordnet. Die Koppel 72 ist gelenkig mit der zweiten Förderschneckenanordnung 38 und der Koppelstange 74 verbunden um den Bewegungsablauf beim Verschwenken der zweiten Förderschneckenanordnung 38 von der Transportstellung 32 hin zu der Arbeitsstellung 31 nicht zu blockieren. Ein Federelement 77, insbesondere ein Gasdämpfer, ist an der Koppel 72 angeordnet, wobei das Federelement 77 zur Beaufschlagung der Koppel 72 mit einer die Koppel 72 auf das zweite Rohr 41 drückenden Zugkraft vorgesehen und eingerichtet ist. Das Federelement 77 ist anderendig gelenkig an dem zweiten Gelenkarm 49 angeordnet. In einer alternativen Ausgestaltungsvariante kann das Federelement 77 anderendig aber auch an dem zweiten Rohr 41 der zweiten Förderschneckenanordnung 38 angeordnet sein.

**Bezugszeichenliste:**

| | | | |
|---|---|---|---|
| 1 | Erntemaschine | 34 | Platte |
| 2 | Erweiterungsvorrichtung | 35 | Verschlussposition |
| 3 | Ernteguttank | 36 | Befüllposition |
| 4 | Schneidwerk | 37 | Erste Förderschneckenanordnung |
| 5 | Schrägförderer | 38 | Zweite Förderschneckenanordnung |
| 6 | Erntegut | 39 | Erstes Rohr |
| 7 | Dreschwerk | 40 | Erste Förderschnecke |
| 8 | Korn-Spreu-Gemisch | 41 | Zweites Rohr |
| 9 | Gutstrom | 42 | Zweite Förderschnecke |
| 10 | Vorbereitungsboden | 43 | Auswurfseite |
| 11 | Reinigungseinrichtung | 44 | Einlassöffnung |
| 12 | Korn | 45 | Übergangsstück |
| 13 | Nichtkornbestandteile | 46 | Hebelanordnung |
| 14 | Wendetrommel | 47 | Viergelenk |
| 15 | Hordenschüttler | 48 | Erster Gelenkarm |
| 16 | Kurzstroh | 49 | Zweiter Gelenkarm |
| 17 | Spreu | 50 | Erstes Gelenk |
| 18 | Rücklaufboden | 51 | Zweites Gelenk |
| 19 | Kornelevator | 52 | Konsole |
| 20 | Öffnung | 53 | Drittes Gelenk |
| 21 | Oberkante | 54 | Viertes Gelenk |
| 22 | Schaufel | 55 | Konsole |
| 23 | Band | 56 | Schwenkachse |
| 24 | Guteinlassöffnung | 57 | Schwenkachse |
| 25 | Wand | 58 | Schwenkachse |
| 26 | Fahrerkabine | 59 | Schwenkachse |
| 27 | Platte | 60 | Erster Aktor |
| 28 | Platte | 61 | Fünftes Gelenk |
| 29 | Gelenkferne Kante | 62 | Sechstes Gelenk |
| 30 | Dreieckiges Element | 63 | Wandungen |
| 31 | Arbeitsstellung zweite Förderschneckenanordnung | 64 | Boden |
| 32 | Transportstellung zweite Förderschneckenanordnung | 65 | Erste Kreisbahn |
| 33 | Basis | 66 | Zweite Kreisbahn |
| 67 | Rotationsbewegung | 74 | Koppelstange |
| 68 | Steuerungseinrichtung | 75 | Achtes Gelenk |
| 69 | Zweiter Aktor | 76 | Konsole |
| 70 | Steuerungseinrichtung | 77 | Federelement |
| 71 | Stabilisator | 78 | Arbeitsstellung erste Förderschneckenanordnung |
| 72 | Koppel | | |
| 73 | Siebtes Gelenk | | |

## Patentansprüche

1. Erntemaschine (1) mit einem Ernteguttank (3) und einer tankinternen ersten Förderschneckenanordnung (37), die zumindest eine erste Förderschnecke (40) umfasst, die sich von einer Guteinlassöffnung (24) an einer Wand (25) des Ernteguttanks (3) ins Innere des Ernteguttanks (3) erstreckt und einer beweglichen tankinternen zweiten Förderschneckenanordnung (38), die zumindest eine zweite Förderschnecke (42) umfasst, wobei die Erntemaschine (1) einen ersten Aktor (60) zum Bewegen der zweiten Förderschneckenanordnung (38) von einer liegend ausgerichteten Transportstellung (32) in eine vertikal ausgerichtete Arbeitsstellung (31) umfasst, **dadurch gekennzeichnet, dass** die zweite Förderschneckenanordnung (38) durch ein Viergelenk (47) beweglich in dem Ernteguttank (3) angeordnet ist.

2. Erntemaschine (1) nach Anspruch 1, **dadurch gekennzeichnet, dass** das Viergelenk (47) einen ersten und zweiten Gelenkarm (48, 49) umfasst,
wobei der erste Gelenkarm (48) mit einem ersten Gelenk (50) drehbeweglich an dem Ernteguttank (3) und mit einem zweiten Gelenk (51) drehbeweglich an der zweiten Förderschneckenanordnung (38) angeordnet ist,
wobei der zweite Gelenkarm (49) mit einem dritten Gelenk (53) drehbeweglich an dem Ernteguttank (3) und mit einem vierten Gelenk (54) drehbeweglich an der zweiten Förderschneckenanordnung (38) angeordnet ist.

3. Erntemaschine (1) nach Anspruch 2, **dadurch gekennzeichnet, dass** sich die zweite Förderschneckenanordnung (38) mit dem ersten und zweiten Gelenkarm (48, 49) in der Transportstellung (32) der zweiten Förderschneckenanordnung (38) diagonal innerhalb des Ernteguttanks (3) erstreckt, wobei vorzugsweise das erste Gelenk (50) und dritte Gelenk (53) einander gegenüberliegend innerhalb des Ernteguttanks (3) angeordnet sind.

4. Erntemaschine (1) nach einem der Ansprüche 2 bis 3, **dadurch gekennzeichnet, dass** der erste Aktor (60) mit einem fünften Gelenk (61) drehbeweglich an dem zweiten Gelenkarm (49) und mit einem sechsten Gelenk (62) drehbeweglich an dem Ernteguttank (3) angeordnet ist.

5. Erntemaschine (1) nach einem der Ansprüche 2 bis 4, **dadurch gekennzeichnet, dass** der zweite Gelenkarm (49) eine kürzere Längserstreckung als der erste Gelenkarm (48) aufweist und vorzugsweise das zweite und vierte Gelenk (51, 54) jeweils beabstandet zueinander angeordnete und sich parallel zueinander erstreckende Schwenkachsen (56, 57) ausbilden, wobei der Abstand der jeweiligen von dem zweiten und vierten Gelenk (51, 54) ausgebildeten Schwenkachsen (56, 57) zueinander geringer ist als die Längserstreckung des zweiten Gelenkarms (49).

6. Erntemaschine (1) nach einem der Ansprüche 1 bis 5, **dadurch gekennzeichnet, dass** ein zweiter Aktor (69) zum Verfahren der ersten Förderschneckenanordnung (37) vorgesehen und eingerichtet ist, wobei die Erntemaschine (1) eine Steuerungseinrichtung (70) zur Ansteuerung des ersten und zweiten Aktors (60, 69) umfasst, wobei die Steuerungseinrichtung (70) derart eingerichtet ist, sodass diese in einem ersten Schritt den zweiten Aktor (69) zum Verfahren der ersten Förderschneckenanordnung (37) in eine Arbeitsstellung (78) und in einem zweiten Schritt den ersten Aktor (60) zum Verfahren der zweiten Förderschneckenanordnung (37) von der Transportstellung (32) in die Arbeitsstellung (31) ansteuert.

7. Erntemaschine (1) nach einem der Ansprüche 1 bis 6, **dadurch gekennzeichnet, dass** die Erntemaschine (1) eine an einer oberen Öffnung (20) des Ernteguttanks (3) angeordnete Erweiterungsvorrichtung (2) zur Volumenvergrößerung umfasst, die in einer flachliegenden Verschlussposition (35) einen die obere Öffnung (20) verschließenden Deckel bildet und in einer aufgestellten Befüllposition (36) das Volumen des Ernteguttanks (3) vergrößert, wobei die erste Förderschneckenanordnung (37) mit einer Hebelanordnung (46) kinematisch mit der Erweiterungsvorrichtung (2) derart gekoppelt ist, sodass beim Verfahren der Erweiterungsvorrichtung (2) von der Verschlussposition (35) in die Befüllposition (36) zugleich die erste Förderschneckenanordnung (37) Verfahren wird.

8. Erntemaschine (1) nach einem der Ansprüche 1 bis 7, **dadurch gekennzeichnet, dass** die Erntemaschine (1) einen Stabilisator (71) zur Aufnahme von auf die zweite Förderschneckenanordnung (38) wirkenden Kräfte umfasst.

9. Erntemaschine (1) nach Anspruch 8, **dadurch gekennzeichnet, dass** der Stabilisator (71) eine gelenkig an der zweiten Förderschneckenanordnung (38) angeordnete Koppel (72) und eine gelenkig mit der Koppel (72) verbundene Stützstrebe (74) umfasst, wobei die Stützstrebe (74) zusätzlich gelenkig mit dem Ernteguttank (3) verbunden ist, wobei vorzugsweise ein Federelement (77), insbesondere Gasdämpfer, an der Koppel (72) angeordnet ist, wobei das Federelement (77) zur Beaufschlagung der Koppel (72) mit einer Zugkraft vorgesehen und eingerichtet ist.

10. Erntemaschine (1) nach einem der Ansprüche 1 bis 9, **dadurch gekennzeichnet, dass** die erste Förderschneckenanordnung (37) ein erstes Rohr (39) umfasst, welches die erste Förderschnecke (40) radial außenseitig umschließt und die zweite Förderschneckenanordnung (38) ein zweites Rohr (41) umfasst, welches die zweite Förderschnecke (42) radial außenseitig umschließt, wobei vorzugsweise zwischen der ersten Förderschneckenanordnung (37) und der zweiten Förderschneckenanordnung (38) ein Übergangsstück (45) zur Abdichtung eines Übergangsbereichs zwischen der ersten Förderschneckenanordnung (37) und der zweiten Förderschneckenanordnung (38) angeordnet ist.

11. Erntemaschine (1) nach einem der Ansprüche 1 bis 10, **dadurch gekennzeichnet, dass** in der Arbeitsstellung (78) der ersten Förderschneckenanordnung (37) und der Arbeitsstellung (31) der zweiten Förderschneckenanordnung (38) die erste und zweite Förderschneckenanordnung (38) derart zueinander angeordnet sind, so dass ein von der ersten Förderschneckenanordnung (37) geförderter Erntegutstrom an die zweite Förderschneckenanordnung (38) übergeben wird und vorzugsweise eine Gutabgabe der zweiten Förderschneckenanordnung (38) mittig im Ernteguttank (3) erfolgt.

12. Erntemaschine (1) nach einem der Ansprüche 1 bis 11, **dadurch gekennzeichnet, dass** sich die erste Förderschneckenanordnung (37) in der Arbeitsstellung (78) schräg nach oben in den Ernteguttank (3) hinein erstreckt und die zweite Förderschneckenanordnung (38) in ihrer Transportstellung (32) abschnittsweise unterhalb der in der Arbeitsstellung (78) befindlichen ersten Förderschneckenanordnung (37) angeordnet ist, wobei die zweite Förderschneckenanordnung (38) mittels des Viergelenks (47) derart beweglich ist, sodass diese von der Transportstellung (32) in die Arbeitsstellung (31) kollisionsfrei zu der in der Arbeitsstellung (78) befindlichen ersten Förderschneckenanordnung (37) beweglich ist.

## Claims

1. A harvesting machine (1) with a harvested material tank (3) and a first screw conveyor assembly (37) inside the tank, which comprises at least one first screw conveyor (40) which extends from a material inlet opening (24) on a wall (25) of the harvested material tank (3) into the interior of the harvested material tank (3) and a movable second screw conveyor assembly (38) inside the tank, which comprises at least one second screw conveyor (42), wherein the harvesting machine (1) comprises a first actuator (60) for moving the second screw conveyor assembly (38) from a transport position (32) lying in a flat orientation into a working position (31) in a vertical orientation, **characterized in that** the second screw conveyor assembly (38) is disposed in the harvested material tank (3) for movement by means of a four bar linkage (47).

2. The harvesting machine (1) according to claim 1, **characterized in that** the four bar linkage (47) comprises a first and second joint arm (48, 49), wherein the first joint arm (48) is disposed on the harvested material tank (3) for rotatable movement with a first joint (50) and on the second screw conveyor assembly (38) for rotatable movement with a second joint (51),
wherein the second joint arm (49) is disposed on the harvested material tank (3) for rotatable movement with a third joint (53) and on the second screw conveyor assembly (38) for rotatable movement with a fourth joint (54).

3. The harvesting machine (1) according to claim 2, **characterized in that**, in the transport position (32) of the second screw conveyor assembly (38), the second screw conveyor assembly (38) with the first and second joint arm (48, 49) extends diagonally inside the harvested material tank (3), wherein preferably, the first joint (50) and third joint (53) are disposed opposite to each other inside the harvested material tank (3).

4. The harvesting machine (1) according to one of claims 2 to 3, **characterized in that** the first actuator (60) is disposed on the second joint arm (49) for rotatable movement with a fifth joint (61) and on the harvested material tank (3) for rotatable movement with a sixth joint (62).

5. The harvesting machine (1) according to one of claims 2 to 4, **characterized in that** the second joint arm (49) has a shorter longitudinal extent than the first joint arm (48) and preferably the second and fourth joints (51, 54) respectively form mutually separated pivot axes (56, 57) extending parallel to one another, wherein the separation of the respective pivot axes (56, 57) formed by the second and fourth joints (51, 54) with respect to each other is smaller than the longitudinal extent of the second joint arm (49).

6. The harvesting machine (1) according to one of claims 1 to 5, **characterized in that** a second actuator (69) is provided and configured for the displacement of the first screw conveyor assembly (37), wherein the harvesting machine (1) comprises a control device (70) for controlling the first and second actuator (60, 69), wherein the control device (70) is configured in a manner such that in a first step, it controls the second actuator (69) for the displacement of the first screw conveyor assembly (37) into a working position (78) and in a second step, it controls the first actuator (60) for the displacement of the second screw conveyor assembly (37) from the transport position (32) into the working position (31).

7. The harvesting machine (1) according to one of claims 1 to 6, **characterized in that** the harvesting machine (1) comprises a volume-enlarging extension device (2) disposed at an upper opening (20) of the harvested material tank (3) which, in a closed position (35) which lies flat, forms a cover closing off the upper opening (20) and, in a deployed filling position (36), enlarges the volume of the harvested material tank (3), wherein the first screw conveyor assembly (37) is kinematically coupled to the extension device (2) with a lever assembly (46) in a manner such that upon the displacement of the extension device (2) from the closed position (35) into the filling position (36), the first screw conveyor assembly (37) is displaced at the same time.

8. The harvesting machine (1) according to one of claims 1 to 7, **characterized in that** the harvesting machine (1) comprises a stabilizer (71) for taking up forces acting on the second screw conveyor assembly (38).

9. The harvesting machine (1) according to claim 8, **characterized in that** the stabilizer (71) comprises a coupler (72) hingedly disposed on the second screw conveyor assembly (38) and a support strut (74) hingedly connected to the coupler (72),
wherein the support strut (74) is additionally hingedly connected to the harvested material tank (3), wherein preferably, a spring element (77), in particular a gas damper, is disposed on the coupler (72), wherein the spring element (77) is provided and configured for the application of a tensile force to the coupler (72).

10. The harvesting machine (1) according to one of claims 1 to 9, **characterized in that** the first screw conveyor assembly (37) comprises a first tube (39) which radially surrounds the outside of the first screw conveyor (40) and the second screw conveyor assembly (38) comprises a second tube (41) which radially surrounds the outside of the second screw conveyor (42), wherein preferably, a transition piece (45) for blocking a transition region between the first screw conveyor assembly (37) and the second screw conveyor assembly (38) is disposed between the first screw conveyor assembly (37) and the second screw conveyor assembly (38).

11. The harvesting machine (1) according to one of claims 1 to 10, **characterized in that** in the working position (78) of the first screw conveyor assembly (37) and the working position (31) of the second screw conveyor assembly (38), the first and second screw conveyor assemblies (38) are disposed with respect to each other in a manner such that a flow of harvested material conveyed from the first screw conveyor assembly (37) is transferred to the second screw conveyor assembly (38) and preferably, material from the second screw conveyor assembly (38) is discharged centrally into the harvested material tank (3).

12. The harvesting machine (1) according to one of claims 1 to 11, **characterized in that** in the working position (78), the first screw conveyor assembly (37) extends upwards at an inclination into the harvested material tank (3), and in its transport position (32), a section of the second screw conveyor assembly (38) is disposed beneath the first screw conveyor assembly (37) situated in the working position (78), wherein the second screw conveyor assembly (38) can be moved by means of the four bar linkage (47) in a manner such that it can be moved from the transport position (32) into the working position (31) without colliding with the first screw conveyor assembly (37) situated in the working position (78).

## Revendications

1. Machine de récolte (1) dotée d'une trémie pour produits récoltés (3) et d'un premier agencement de vis de convoyage (37) interne à la trémie, qui comprend au moins une première vis de convoyage (40), laquelle s'étend depuis une ouverture d'entrée de produit (24), dans une paroi (25) de la trémie pour produits récoltés (3), vers l'intérieur de la trémie pour produits récoltés (3), et dotée d'un deuxième agencement de vis de convoyage (38) mobile, interne à la trémie, qui comprend au moins une deuxième vis de convoyage (42), la machine de récolte (1) comprenant un premier actionneur (60), destiné à déplacer le deuxième agencement de vis de convoyage (38) d'une position de transport (32) couchée vers une position de travail (31) à orientation verticale, **caractérisée en ce que** le deuxième agencement de vis de convoyage (38) est disposé de façon mobile dans la trémie pour produits récoltés (3), grâce à un quadrilatère articulé (47).

2. Machine de récolte (1) selon la revendication 1, **caractérisée en ce que** le quadrilatère articulé (47) comprend un premier et un deuxième bras articulé (48, 49), le premier bras articulé (48) étant disposé avec une première articulation (50) de façon mobile en rotation sur la trémie pour produits récoltés (3), et avec une deuxième articulation (51) de façon mobile en rotation sur le deuxième agencement de vis de convoyage (38), le deuxième bras de levier (49) étant disposé avec une troisième articulation (53) de façon mobile en rotation sur la trémie pour produits récoltés (3), et avec une quatrième articulation (54) de façon mobile en rotation sur le deuxième agencement de vis de convoyage (38).

3. Machine de récolte (1) selon la revendication 2, **caractérisée en ce que** dans la position de transport (32) du deuxième agencement de vis de convoyage (38), le deuxième agencement de vis de convoyage (38), avec le premier et le deuxième bras articulé (48, 49), s'étend de manière diagonale à l'intérieur de la trémie pour produits récoltés (3), la première articulation (50) et la troisième articulation (53) étant de préférence disposées en vis-à-vis l'une de l'autre dans la trémie pour produits récoltés (3).

4. Machine de récolte (1) selon une des revendications 2 à 3, **caractérisée en ce que** le premier actionneur (60) est disposé avec une cinquième articulation (61) de façon mobile en rotation sur le deuxième bras articulé (49), et avec une sixième articulation (62) de façon mobile en rotation sur la trémie pour produits récoltés (3).

5. Machine de récolte (1) selon une des revendications 2 à 4, **caractérisée en ce que** le deuxième bras articulé (49) présente une dimension longitudinale plus courte que le premier bras articulé (48), et la deuxième et la quatrième articulation (51, 54) forment des axes de pivotement (56, 57) disposés respectivement à distance l'un de l'autre et s'étendant parallèlement l'un à l'autre, la distance réciproque des axes de pivotement (56, 57) respectifs formés par la deuxième et la quatrième articulation (51, 54) étant inférieure à la dimension longitudinale du deuxième bras articulé (49).

6. Machine de récolte (1) selon une des revendications 1 à 5, **caractérisée en ce qu'**un deuxième actionneur (69) est prévu et agencé pour déplacer le premier agencement de vis de convoyage (37), la machine de récolte (1) comprenant un dispositif de commande (70) destiné à activer le premier et le deuxième actionneur (60, 69), le dispositif de commande (70) étant conçu pour activer, lors d'une première étape, le deuxième actionneur (69) aux fins de déplacer le premier agencement de vis de convoyage (37) dans une position de travail (78) et, lors d'une deuxième étape, le premier actionneur (60) aux fins de déplacer le deuxième agencement de vis de convoyage (37) de la position de transport (32) dans la position de travail (31).

7. Machine de récolte (1) selon une des revendications 1 à 6, **caractérisée en ce que** la machine de récolte (1) comprend un dispositif d'extension (2) pour une augmentation de volume, qui est disposé sur une ouverture supérieure (20) de la trémie pour produits récoltés (3) et qui, dans une position de fermeture (35) à plat, forme un couvercle fermant l'ouverture supérieure (20), et, dans une position de remplissage (36) redressée, augmente le volume de la trémie pour produits récoltés (3), le premier agencement de vis de convoyage (37) étant accouplé par un dispositif de levier (46) sur le plan cinématique au dispositif d'extension (2) de manière à ce que, lors du déplacement du dispositif d'extension (2) de la position de fermeture (35) dans la position de remplissage (36), le premier agencement de vis de convoyage (37) soit déplacé en même temps.

8. Machine de récolte (1) selon une des revendications 1 à 7, **caractérisée en ce que** la machine de récolte (1) comprend un stabilisateur (71) destiné à absorber les forces agissant sur le deuxième agencement de vis de convoyage (38).

9. Machine de récolte (1) selon la revendication 8, **caractérisée en ce que** le stabilisateur (71) comprend une bielle (72), disposée de manière articulée sur le deuxième agencement de vis de convoyage (38), et une entretoise (74) reliée de manière articulée à la bielle (72), l'entretoise (74) étant en plus reliée de manière articulée à la trémie pour produits récoltés (3), sachant qu'un élément faisant ressort (77), notamment un amortisseur à gaz, est disposé sur la bielle (72), l'élément faisant ressort (77) étant prévu et conçu pour l'application d'une force de traction à la bielle (72).

10. Machine de récolte (1) selon une des revendications 1 à 9, **caractérisée en ce que** le premier agencement de vis de convoyage (37) comprend un premier tube (39) qui entoure radialement à l'extérieur la première vis de convoyage (40), et le deuxième agencement de vis de convoyage (38) comprend un deuxième tube (41) qui entoure radialement à l'extérieur la deuxième vis de convoyage (42), une pièce de transition (45) étant de préférence placée entre le premier agencement de vis de convoyage (37) et le deuxième agencement de vis de convoyage (38), aux fins d'étanchéifier une zone de transition entre le premier agencement de vis de convoyage (37) et le deuxième agencement de vis de convoyage (38).

11. Machine de récolte (1) selon une des revendications 1 à 10, **caractérisée en ce que**, dans la position de travail (78) du premier agencement de vis de convoyage (37) et la positon de travail (31) du deuxième agencement de vis de convoyage (38), le premier et le deuxième agencement de vis de convoyage (38) sont disposés l'un par rapport à l'autre de manière à ce qu'un flux de récolte transporté par le premier agencement de vis de convoyage (37) soit transféré au deuxième agencement de vis de convoyage (38), et qu'un déchargement de produits du deuxième agencement de vis de convoyage (38) s'effectue de préférence au milieu dans la trémie pour produits récoltés (3).

12. Machine de récolte (1) selon une des revendications 1 à 11, **caractérisée en ce que** dans la position de travail (78), le premier agencement de vis de convoyage (37) s'étend en biais vers le haut, dans la trémie pour produits récoltés (3), et le deuxième agencement de vis de convoyage (38), dans sa position de transport (32), est disposé par portions en-dessous du premier agencement de vis de convoyage (37) se trouvant dans la position de travail (78), le deuxième agencement de vis de convoyage (38) étant mobile du fait du quadrilatère articulé (47), de manière à ce qu'il puisse être déplacé de la position de transport (32) dans la position de travail (31) sans entrer en collision avec le premier agencement de vis de convoyage (37) se trouvant dans la position de travail (78).
